# EUROPEAN PATENT SPECIFICATION

(11) **EP 2 929 694 B1**
(45) Date of publication and mention of the grant of the patent: **17.07.2019**
(21) Application number: 13860831.0
(22) Date of filing: 09.12.2013
(51) Int. Cl.: H04N 21/63, H04N 21/643

(54) **METHOD AND SYSTEM FOR STREAMING MULTIMEDIA CONTENTS IN A WI-FI NETWORK**
VERFAHREN UND SYSTEM ZUM STREAMING VON MULTIMEDIA-INHALTEN IN EINEM WI-FI-NETZWERK
PROCÉDÉ ET SYSTÈME DESTINÉS À LA TRANSMISSION EN CONTINU DE CONTENUS MULTIMÉDIAS DANS UN RÉSEAU WIFI

(30) Priority: 07.12.2012 IN 5104CH2012
(43) Date of publication of application: 14.10.2015
(73) Proprietor: Samsung Electronics Co., Ltd., Suwon-si, Gyeonggi-do 443-742 (KR)
(72) Inventor: VEDULA, Kiran Bharadwaj, Bangalore 560093 (IN); KIM, Jun-Hyung, Yongin-si Gyeonggi-do 446-906 (KR)
(74) Representative: HGF Limited
(86) International application number: PCT/KR2013/011359
(87) International publication number: WO 2014/088379

(56) References cited:
- JP-A- 2008 035 517
- US-A1- 2005 149 970
- US-A1- 2006 236 250
- US-A1- 2008 061 578
- US-A1- 2009 031 365
- US-A1- 2012 178 368
- "Wi-Fi Alliance Member Symposium", , 1 April 2011 (2011-04-01), XP055046396, Retrieved from the Internet: URL:http://www.wi-fi.org/files/20110421_Ch ina_Symposia_full_merge.pdf [retrieved on 2012-12-03]
- "Wi-Fi Peer-to-Peer (P2P) Technical Specification v1.2", WI-FI PEER-TO-PEER (P2P) SPECIFICATION V1.2, WI-FI ALLIANCE, US , vol. V1.2 14 December 2011 (2011-12-14), pages 1-159, XP008165048, Retrieved from the Internet: URL:https://www.wi-fi.org/knowledge-center /published-specifications
- 'Wi-Fi Certified Miracast Program Focus' WI-FI ALLIANCE MEMBER SYMPOSIUM IN GUANGZHOU, [Online] November 2012, CHINA, pages 110 - 160, XP055265396 Retrieved from the Internet: <URL:HTTP://WWW.CSZIT.COM/UPFILE/201211/201 21114105435.PDF>

## Description

### Technical Field

The present invention relates to relates to streaming multimedia contents in the Wi-Fi network.

### Background Art

With technological progress in Wireless Fidelity (Wi-Fi), the Wi-Fi has expanded in application dimension, moving from its core networking market into other uses. Most of the modern electronic devices such as smart phones, tablets, peripherals, TVs, set-top boxes and the like are equipped with Wi-Fi capabilities. Emerging Wi-Fi technology has come up with Wi-Fi Display (WFD) mechanism with ability to transmit multimedia content comprising audio-visual content over Wi-Fi network providing a cable-free revolution.

The WFD specification defines mechanisms for mirroring multimedia content between a WFD source device (source) and a WFD sink device (sink) by establishing a WFD session. The source captures the multimedia content being played, encodes, packetizes and streams it to the sink. The sink de-packetizes, decodes and displays the multimedia content on either the sink or a display connected to the sink. The WFD session is established when the source and the sink discover each other, interconnect using either Wi-Fi Peer to Peer (P2P) or Tunneled Direct Link Setup (TDLS), and know about each other capabilities through capability exchange and negotiation.

The existing Wi-Fi Display specification limits the WFD session to only a single source, a single primary sink with audio-video functionality and an optional coupling to a secondary sink limited to only audio functionality. The existing methods fail to handle multiple sources at the sink in an interoperable way. However, various multiuser scenarios such as multiplayer interactive gaming applications demand simultaneous streaming of multimedia content from multiple sources on to single sink.

US patent application number 2012/178368 A1 (Fleck et al) describes wireless communication techniques, ranging from active power control techniques that enable a device to bypass a power amplifier for wireless communication to multiple-band techniques of wireless communication. A technique for adjusting a display based on wireless communications received from a plurality of devices is also described.

"Wi-Fi Alliance Member Symposium" (available at http://www.wi-fi.org/files/20110421_China_Symposia_full_merge.pdf) provides a current overview of Wi-Fi technology as of 2011. Overviews of topics including Wi-Fi Direct, Wi-Fi Display and Wi-Fi Protected Setup are provided.

"Wi-Fi Peer-to-Peer (P2P) Technical Specification v1.2" by Wi-Fi Alliance (available at https://www.wi-fi.org/knowledge-center/published-specifications) is the technical specification for WFA P2P, a solution for Wi-Fi device-to-device connectivity. The specification includes details of device discovery and service discovery, pairing, connectivity, power management, group management, coexistence and legacy.

### Disclosure of Invention

### Technical Problem

The aspect of the embodiments herein is to provide a method and system that enables a first source and one or more second sources in a group to simultaneously stream multimedia contents to a sink after establishing one or more Wireless Fidelity Display (WFD) session with the sink.

Another aspect of the invention is to provide a method that enables the sink to share the display screen (screen) of the sink among the first source and one or more second sources in the group to display the video of the multimedia content.

Another aspect of the invention is to provide a method that enables the sink to select audio of the multimedia content from a source in the group to render the selected audio.

Another aspect of the invention is to provide a method that enables the sink, the first source and one or more second sources in the group to select mode of operation for simultaneous streaming of the multimedia contents to the sink.

### Solution to Problem

Accordingly the invention provides a method for streaming multimedia content in a Wireless Fidelity (Wi-Fi) network, wherein the method comprises discovering source association information comprising a source intent value capability exchange between a display device and at least one of a first source and at least one second source after performing Device Discovery (DD) and Service Discovery (SD). The method further comprises establishing at least one Wi-Fi Display (WFD) session between the sink and at least one of the first source and the at least one second source for streaming the multimedia content in the Wi-Fi network. Thereafter, the method comprises displaying video of the multimedia content from the first source and the at least one second source, wherein a screen of the display device is shared among at least one of the first source and the at least one second source. Furthermore, the method comprises rendering audio from one of the first source and the at least one second source based on the source intent values received from the first source and the at least one second source.

Accordingly the invention provides a display device for streaming multimedia content in a Wireless Fidelity (Wi-Fi) network. The display device is configured to discover source association information comprising a source intent by the display device by performing capability exchange between the display device and at least one of the first source and the at least one second source after performing Device Discovery (DD) and Service Discovery (SD). Further, the display device is configured to establish at least one Wi-Fi Display (WFD) session between the display device and at least one of the first source and the at least one second source for streaming the multimedia content in the Wi-Fi network. Further, the display device is configured to display video of the multimedia content from the first source and the at least one second source, wherein a screen of the display device is shared among at least one of the first source and the at least one second source. Furthermore, the display device is configured to render audio of the multimedia content by the display device after selecting the audio from one of the first source and the at least one second source based on the source intent values received from the first source and the at least one second source.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### Brief Description of Drawings

This invention is illustrated in the accompanying drawings, throughout which like reference letters indicate corresponding parts in the various figures. The embodiments herein will be better understood from the following description with reference to the drawings, in which:
FIG. 1 illustrates an example WFD environment with one or more sources in a group simultaneously streaming multimedia content to a sink by establishing one or more WFD sessions, according to embodiments as disclosed herein;
FIG. 2 illustrates a sequence diagram explaining formation of a pre-association group for establishing one or more WFD sessions in an associated mode of operation, according to embodiments as disclosed herein;
FIG. 3 illustrates a sequence diagram explaining establishment of one or more WFD sessions by one or more sources in the pre-associated group with the sink for the associated mode of operation, according to embodiments as disclosed herein;
FIG. 4a illustrates a sequence diagram for a multiplayer game by establishing one or more WFD sessions in the associated mode of transmission and FIG. 4b illustrates corresponding display screen of the sink, according to embodiments as disclosed herein;
FIG. 5a illustrates a sequence diagram explaining establishment of one or more WFD sessions for a post grouping mode in an unassociated mode of operation and, FIG. 5b, FIG. 5c illustrate corresponding display screens of the sink, according to embodiments as disclosed herein;
FIG. 6a illustrates a sequence diagram explaining establishment of one or more WFD sessions for a pre-grouping mode in the unassociated mode of operation and, FIG. 6b, FIG. 6c illustrate corresponding display screen of the sink, according to embodiments as disclosed herein; and
FIG. 7a illustrates a sequence diagram explaining establishment of one or more WFD sessions for a part display mode of operation and FIG. 7b illustrates corresponding display screen of the sink, according to embodiments as disclosed herein.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve a method and system to enable plurality of sources in a group to simultaneously stream multimedia contents to a sink after establishing one or more Wireless Fidelity Display (WFD) sessions or a Real Time Streaming Protocol (RTSP) session with the sink. The group of plurality of sources comprises a first source and one or more second sources as members of the group. The sink shares the display screen of the sink among the members of the group to display the video of the multimedia content. The sink selects audio of the multimedia content from a source in the group based on an audio intent value received from the members of the group. The sink then renders the selected audio from the source and indicates the corresponding source on the display screen.

In an embodiment, the source can be mobile phone, a smart phone, a tablet, a Personal Digital Assistant (PDA), a smart TV and similar electronic device that is WFD capable for streaming multimedia contents on the sink.

In an embodiment, the sink can be a television, a tablet, a laptop and any electronic device that is WFD capable for rendering the received audio and video from the WFD source.

The method provides various modes of operation for simultaneous streaming of the multimedia contents by the members in the group to the sink. In an embodiment, the modes of operation can be an associated mode, an unassociated mode and a part display mode. The unassociated mode comprises a post grouping mode and a pre-grouping mode of operation. The mode of operation defines the way a first source and one or more second sources among plurality of sources form the group for simultaneously streaming their multimedia contents on the screen of the sink.

There can be plurality of sources in the group. The number of sources streaming simultaneously on the sink is limited by one or more parameters such as maximum number of sources supported by the sink and such similar parameters.

Thus, the method enables applications such as multiplayer interactive gaming by enabling the sink to render video from plurality of sources and audio from one of the selected source in an interoperable way.

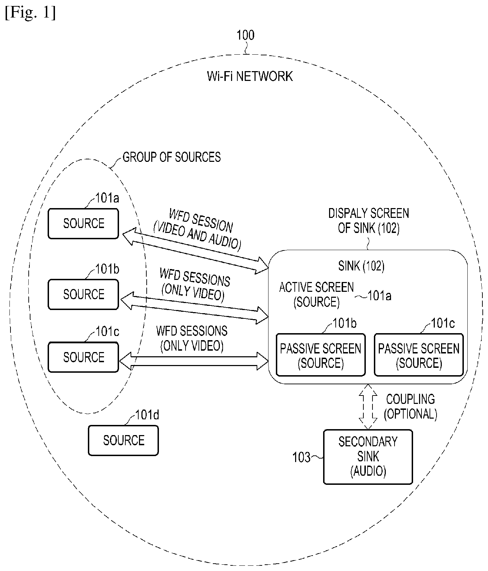

Referring now to the drawings, and more particularly to FIGS. 1 through 7, where similar reference characters denote corresponding features consistently throughout the figures, there are shown preferred embodiments.

FIG. 1 illustrates an example WFD environment with one or more sources in a group simultaneously streaming multimedia content to the sink by establishing one or more WFD sessions, according to embodiments as disclosed herein. The figure depicts source 101a (first source) and sources 101b, 101c and 101d (one or more secondary sources) respectively in a Wi-Fi network 100. The sink 102 is primary sink capable of mirroring audio, video of the multimedia contents during the WFD sessions established by the sources101a, 101b, 101c respectively. The sink 102 can have an optional coupling to a secondary sink 103 which is an audio sink.

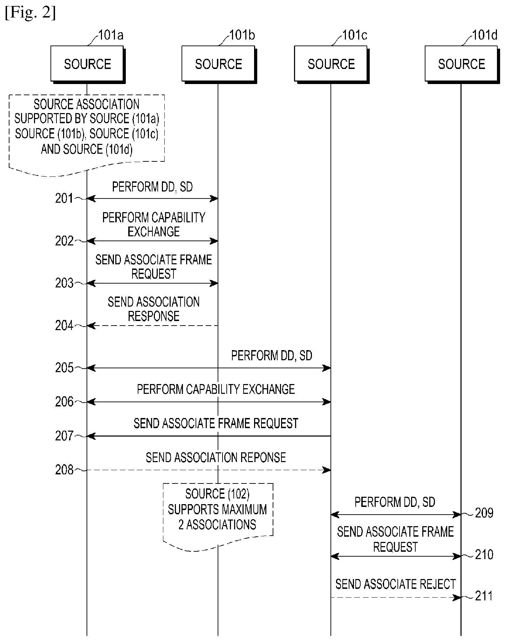

The sink 102 discovers source association information comprising the audio intent value and mode of operation from the source 101a and source 101b and source 101c by performing capability exchange. Based on the discovered mode of operation the WFD sessions are established between the sink 102 and each of the sources 101a, 101b and 101c respectively. The source 101a, 101b and 101c are member of single group and each source establishes the WFD session with the sink 102. As depicted in figure, if the sink 102 is configured to support only three sources for the streaming multimedia contents, the sink 102 restricts additional source 101d to be the member of group in any selected mode of operation for streaming the multimedia contents. The mode of operation of the established WFD sessions for streaming of multimedia contents can be the associated mode, the unassociated mode or the part display mode. Above mentioned modes are described in the FIGs. 2 to 7. The unassociated mode comprises a pre-grouping mode and a post grouping mode of operation for streaming of the multimedia contents.

The mode of operation defines the way the group is formed. In the associated mode, the plurality of sources, form the group among themselves prior to establishing the WFD session with the sink. In the post grouping mode, the group is formed by the sink after the WFD session starts with one of the source. In the pre-grouping mode the group is formed by the sink before start of WFD session with either of the source.

The source 101a, 101b and 101c are members of single group and each source establishes the WFD session with the sink 102.

In an embodiment, based on the application the method can choose to operate in one of the operating modes. For example, a delay in the WFD session establishment by the application on the source results in pre-grouping mode of operation, whereas immediate WFD session establishment by the application on the source results in post-grouping.

A sink group that includes the sink and the plurality of sources comprising the first source and at least one second source can be identified using a unique identifier called Group ID. The Group ID is the application level identifier for the group and the sink can have only one group supported at a time. Thus, the method enables usage of the Sink ID as the Group ID.

In an embodiment, the sink receives information for the mode of operation in the source association information from one or more sources in the Wi-Fi network 100 using a new message M20. The M20 can either be a separate ModeSelect frame or an RTSP command. For example, the method defines a new message M20. The ModeSelect frame is a dummy frame with no data or some data relevant for the WFD sessions for that selected mode of operation.

In an embodiment, the sink can select and inform the mode of operation to one or more sources during the capability exchange by sending an operation mode parameter indicating the selected mode of operation. The operation mode parameter can have three distinct values corresponding to the associated mode, the pre-grouping mode and the post grouping mode.

In an embodiment, the audio intent value enables the sink to assign active status to one of the source which is the member of the group.

As depicted in figure, the sink 102 assigns active status to source 101a that has highest audio intent value and mirrors source's 101a audio and video on the display screen of the sink 102. The sink assigns passive status to remaining members of the group (sources 101b and 101c) and renders only the video of the sources 101b and 101c respectively on the display screen of the sink 102.

In an embodiment, if the audio intent values of the sources 101a, 101b and 101c respectively are equal, then the sink 102 is configured to select the source which can be assigned with active status. The sink 102 chooses the source to assign the active status based on other parameters such as resources available with the source, audio formats supported and the like.

The audio intent value is only an indication or request by the source to acquire the active source status and the sink can accept or reject the received indication.

In an embodiment, the sink 102 displays video of sources 101a, 101b and 101c respectively and audio is played by the active source 101a using its own resources.

In an embodiment, the sink 102 can switch the active and passive status of each source based on application level logic in the sink 102 or whenever the sink receives request from the passive source for assigning active source status.

The way the sink 102 displays the video from each source is based on configuration settings on the sink 102. For example the sink can choose either to split the screen horizontally or vertically based on number of sources that are associated to a group or in a way that seems suitable for the type of content to be displayed.

In an embodiment, the configuration settings for the sink can be sent from the source to the sink.

In an embodiment, when sink 102 operates in coupled sink mode, then audio for source assigned with active status is transferred to the secondary sink 103 (dedicated audio sink). The existing passive status of remaining sources is unchanged. In an embodiment of coupled sink mode, if the current application demands, the free audio resource of sink 102 (primary sink) can be used for source 101b or source 101c which are assigned with passive status for the established WFD sessions.

In an embodiment, the sink mirrors multiple streams sent from a single source. The sink assigns one stream among the multiple streams as active stream to mirror the audio and video of the active stream. The remaining streams are assigned passive status and only video of the passive streams is displayed on the display of the sink.

FIG. 2 illustrates a sequence diagram explaining formation of a pre-association group for establishing one or more WFD sessions in associated mode of operation, according to embodiments as disclosed herein.

For the associated mode of operation, the pre-association group of sources is formed (created) after plurality of sources comprising the first source and one or more second sources join as member of the pre-association group. This creates a source association between these members before initiating the WFD session with the sink. To enable source association between pluralities of sources in the Wi-Fi network 100 for creating or forming the pre-association group the method provides a source association procedure. The source association may or may not be supported by all sources in the Wi-Fi network 100. The method enables the plurality of sources in the Wi-Fi network 100 to indicate their support for the source association capability using a parameter Source_Association_Support during capability exchange message flows. The Source_Association_Support parameter set to a value 1 (true) indicates that the source supports associated mode source association between the plurality of sources and a value of 0 (false) indicates the source does not support associated mode source association between the sources. The method provides a capability parameter Associated_Source in the capabilities of the source association capable one or more sources in the Wi-Fi network 100. The value of the Associated_Source parameter is set to 1 (true) by the source if the source is associated with at least one other source; else the value is set to 0 (false).

The method provides a parameter No_Of_Sources_Associated to the source association capable one or more sources to maintain a count of number of associated sources in the pre-associated group. When the source is not associated with any other source the value of No_Of_Sources_Associated is set to 0 (false) and is incremented by one with every new source association with other source association capable sources.

In an embodiment, the sources can set a limit on number of source associations using a parameter Max_Source_Associations. The value of the Max_Source_Associations provides maximum allowed source associations for the source. For example: if a source indicates its Max_Source_Associations as 2, it is unable to associate with more than 2 other source.

The source association procedure happens sequentially and at any point of time a source can run source association procedure with only one source.

As depicted in the figure, the source 101a (first source), source 101b, source 101c, source 101d (one or more second sources) with their Source_Association_Support parameter set to value 1 indicate their capability to support source association. Further, the figure depicts exchange of messages for performing the source association procedure to form the pre-association group. Initially, as none of the sources are associated with each other, all sources 101a, 101b, 101c and 101d respectively have the No_Of_Sources_Associated parameter value set to 0. The source 101a and source 100b in the Wi-Fi network 100discover each other by performing (201) Device Discovery (DD) and an optional Service Discovery (SD).

Upon performing the DD and SD a Transmission Control Protocol (TCP) connection is established between the source 101a and source 101b. Further, both initiator source 101a and discovered source 101b perform (202) capability exchange by exchanging RTSP messages Mlto M4. Once capability exchange procedure is performed, the source 101a and source 101b identify whether each of them supports source association by verifying the value of Source_Association_Support. If any source fails to support the source association, then the source association procedure for the corresponding source is terminated.

If source association is supported by the source 101a and source 101b, then the source association procedure steps can be performed. As described, initially source 101a and source 101b are not associated with any other source, the parameter; No_Of_Sources_Associated is set to 0 by both the sources. Either of the source 101a or source 101b can initiate the source association procedure. The source 101a initiates a request for performing source association and sends (203) a new M17 RTSP command such as associate frame request to source 101b. In response, the source 101b sends (204) a new M18 RTSP response with association response, indicating the source association is successful. The association request and association response frames are dummy frames without data.

In an embodiment, data relevant for the source association procedure can be included in the association request and association response frame.

Once source association is successful both source 101a and source 101b update their Associated_Source parameter to land No_Of_Sources_Associated parameter to 1. Further, the association with the source 101c can be initiated by source 101a, source 101b or the source 101c itself. As depicted in the figure, source 101c the starts source association with source 101a. The source 101c performs (205) DD, SD, performs (206) capability exchange, sends (207) associate frame request and receives the association frame response sent (208) by source 101a, indicating successful association. Upon successful association with one of the member (source 101a) of the pre-associated group, the source 101c is automatically associated with the entire members in the pre-associated group such as source 101b in FIG. 2.

Further, any other source in the Wi-Fi network 100 such as source 101d interested in joining the pre-associated group can start the source association procedure and performs (209) DD, SD with one of the member of the pre-associated group (source 101c). The source 101b has Max_Source_Associations value set to 2 indicating it is unable to associate with more than two devices. As source 101b, is already associated to two other sources (source 101a and source 101b). The source 101d sends the associate frame request to source 101c. The request is rejected by the source 101c as the Max_Source_Associations value of source 101b limits any further expansion of the pre-associated group. The source 101c sends (211) an association reject message in response to request from source 101d.

In an embodiment, the sources in the Wi-Fi network may be capable of joining multiple pre-association groups. The method enables the sources to indicate multi association capability in its capabilities using a new Multi_Association_Capable parameter. The Multi_Association_Capable parameter value set to 1(true) indicates the source is multi association capable and value set to 0 (false) indicates the source is not Multi Association capable.

In an embodiment, the source 101d which was rejected by the pre-association group formed between source 101a, source 101b and source 101c can start source association procedure with source 101a or source 101c if these sources are multi association capable. The new source association of source 101a and/or source 101cis independent of previous source association performed for forming the pre-associated group with the source 101b and source 101c.

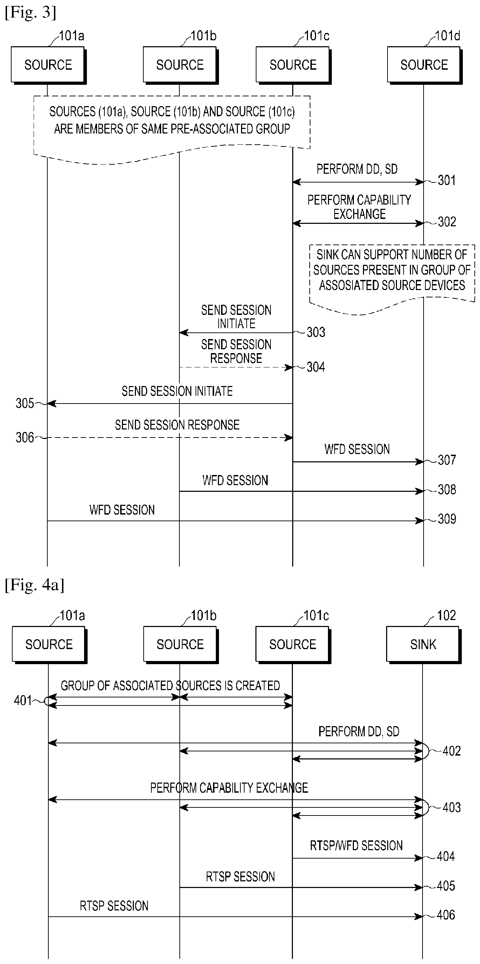

FIG. 3 illustrates a sequence diagram explaining establishment of one or more WFD sessions by one or more sources in the pre-associated group with the sink for associated mode of operation, according to embodiments as disclosed herein. As depicted in the figure, the sources 101a, 101b and 101c respectively form the pre-associated group of sources. Either of the members of the pre-associated group can initiate the WFD session.

As depicted in figure, source 101c initiates the WFD session for the pre-associated mode of operation and performs (301) DD, SD by exchanging messages with the sink 102. Further, the capability exchange is performed (302) between the source 101c and the sink 102.

The sink may or may not be able to support more than specific number of sources for the WFD sessions. The method enables the sink to indicate the number of sources supported for the selected mode of operation in the sink's capabilities using a Max_Source_Supported parameter.

During the capability exchange performed, the sink 102 determines the number of sources (members) in the pre-associated group that initiates the WFD session. The parameter No_Of_Sources_Associated which is set within source 101c enables the sink to know the number of sources (members) in the pre-associated group.

At this step, the source 101c determines if the sink 102 supports the number of members in the pre-associated group by checking if No_Of_Sources_Associated parameter value set in the source 101c is less than or equal to the Max_Source_Supported parameter of the sink 102. As depicted in the figure, the sink 102 supports the number of members in the pre-associated group and the support is conveyed to the source 101a during the capability exchange performed. Upon confirmation of the sink support for the pre-associated group, the method enables the source 101cto inform the members of the pre-associated group about the sink support using a new separate SessionInitiate frame. The SessionInitiate frame is a dummy frame without any data.

In an embodiment, a new M19 RTSP command is used for indicating the sink support for the pre-associated group. The source 101c sends (303) the session initiate message to source 101b which sends (304) a session response as an acknowledgement for initiating the WFD session. Further, the source 101c sends (305) the session initiate message to source 101a which sends (306) the session response as the acknowledgement for initiating the WFD session. Once every member in the pre-associated group receives the session initiate message and responds to the message, the each member of the pre-associated group executes (307, 308, 309) the usual sequence of WFD session setup procedures with the sink 102 starting from DD, SD, capability exchange and the actual WFD session.

If a non-member source is interested in joining the pre-associated group, the existing pre-associated group has to be torn down to form a new pre-associated group.

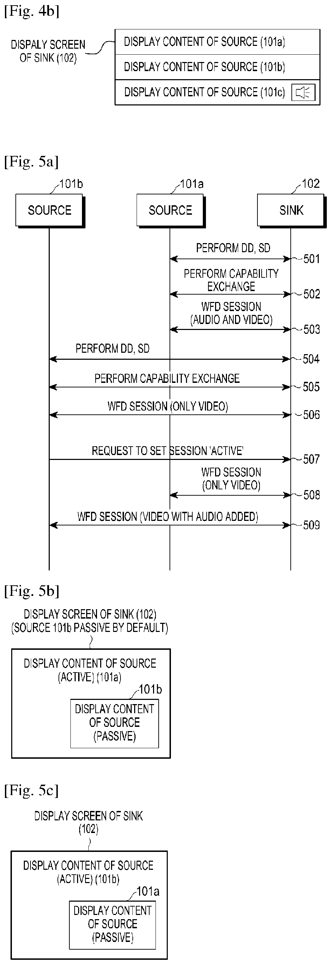

FIG. 4a illustrates an example sequence diagram for a multiplayer game by establishing one or more WFD sessions in the associated mode of transmission and FIG. 4b illustrates corresponding display screen of the sink, according to embodiments as disclosed herein. As depicted in the FIG. 4a the sources 101a, 101b and 101c respectively exchange messages to create (401) or form the pre-associated group by performing source association procedure as described in FIG. 2. The sink 102, supports the number of members in the pre-associated group and as described in FIG.3 every member of the pre-associated group (sources 101a, 101b and 101c respectively) perform (402) DD, SD and perform (403) capability exchange with the sink 102 a. Further sources 101a, 101b and 101c respectively individually establish (405, 406 and 407) WFD session with sink 102. The sink 102 allows video WFD sessions for the sources 101a, 101b and 101c respectively. Further, one of the chosen sink which is assigned the active status is allowed to establish video and audio session. Further, the sink renders audio of the chosen sink along with video of all the sources 101a, 101b and 101c respectively.

In an embodiment, the sink enables the chosen sink to play the audio using the audio resources of the active status source and establishes only video WFD sessions with each source.

The FIG. 4b depicts the display screen of the sink 102, with the sink 102 sharing the display screen equally. The figure depicts source 101c is chosen, assigned active status by the sink 102 and audio of only source 101c is played. The sink 102 provides indication for chosen active source to the user.

In an embodiment, the indication can be a speaker logo, a text 'ACTIVE', a text 'AUDIO' and the like displayed on the shared sink screen space corresponding to the selected active source.

For example, source association between the sources may be required in the case where the screen resources of the sink are shared equally between the sources. This can be applicable usually in the multiplayer interactive gaming applications scenario where every player with his/her own source such as the smart phone, the tablet and the PDA form the associated group. Once the associated group is formed, these sources simultaneously stream their video to the smart TV screen (sink). The smart TV displays the video from each source on the display screen by distributing screen space equally among the associated sources. The smart TV renders audio of one of the selected source such as the PDA (assigned with active source status) whenever the gaming session is active for the PDA user. Whenever the gaming session for the PDA user ends, the smart TV assigns active source status to the tablet and renders audio from the tablet along with the video of all the associated sources being displayed on the screen.

The details about which source is running the game and how each source interacts with another source for acquiring the game content are dependent on implementation details of the multi-player game or similar applications. The method assumes that each source has its audio and video.

FIG. 5a illustrates a sequence diagram explaining establishment of one or more WFD sessions for a post grouping mode in the unassociated mode of operation and, FIG. 5b, FIG. 5c illustrate corresponding display screens of the sink, according to embodiments as disclosed herein.

Any source in the Wi-Fi network 100 can operate in the unassociated mode of operation if the source has not performed source association procedure as described in FIG. 2 with any of the other sources in the Wi-Fi network 100 device. If such a source communicates with the sink 102, the sink 102 operates in the unassociated mode.

The remaining sources that may join to form a group for the unassociated mode of operation are assigned passive source status by the sink 102. The passive status sources are provided with only Picture in Picture (PIP) screen share of the sink 102 with only video session supported for them. For example, the video for PIP may be a very basic format and need not be of high quality like High Definition (HD). The number of PIP screens supported by the sink can be limited and the method enables the sink to indicate the PIP limitation in its capability using a parameter No_Of_PIP_Supported.

In an embodiment, based on the multimedia content displayed on the screen the method enables the sink to render audio and video from one of the passive source status sources that are assigned PIP share of the screen while displaying only video of the selected active source that is provided with major portion of the screen. For example, in the post-grouping mode the laptop (source) is assigned with the passive source status and gets PIP share of the screen space. The method enables the smart TV (sink) to mirror audio and video for a movie from the laptop. The smart camera is assigned the active source status and gets major portion of the screen to display the images (only video). Thus, the user can enjoy watching images from his camera while keeping track of the movie being played as PIP.

The unassociated mode comprises two modes of operation the post-grouping mode and the pre-grouping mode. The sink and the sources operate in the post-grouping mode when the group is formed by the sink after the WFD session starts with one of the sources in the Wi-Fi network 100.

The post-grouping mode of operation is based on certain predefined rules such as: The first source to perform the DD, SD and capability exchange with the sink is assigned the active source status by default. As new sources start DD, SD and capability exchange, irrespective of their audio intent value, they are treated as passive sources and assigned passive source status by the sink. Any source in the Wi-Fi network 100 if interested in becoming the active source should explicitly request the sink about the intent.

As depicted in the FIG. 5a, the source 101a performs (501) DD, SD and performs (502) capability exchange with the sink 102. The sink 102 identifies the mode of operation for the WFD session to be established during the capability exchange between the source 101a and the sink. Further, the source 101a starts (503) the WFD session with the sink 102. The sink 102 assigns active source status to the sink 101a allowing the source 101a to establish audio and video WFD session, enabling the source 101a to transfer both video and audio to the sink 102. The source 101a, assigned with active status receives the main portion of the display screen of the sink 102 as depicted in FIG. 5b. Thereafter, the source 101b performs (504) DD, SD and performs (505) capability exchange with the same sink 102.Further, the sink 102 assigns passive status to the source 102 and allows establishment of only video WFD session. The video of the source 102 is displayed as a PIP on the display screen of the sink 102 as depicted in FIG. 5b.The audio session is disallowed for source 101b as it is assigned passive status.

Thereafter, if at any later instant of time, the source 101b is interested in becoming the active source, the source 101b requests (507) the sink 102 by sending set session active request for the same. The sink 102 can accept (honor) or reject the request. As depicted in the FIG. 5a, the sink accepts the request and assigns active status to the source 101b and switches the source 101a to passive status. Once the status of the source 101a and 101b are switched, the WFD session with only video is established (508) between the source 101a and the sink 102. Further, the WFD session with audio and video is established (508) between the source 101b and the sink 102 which now renders the audio of source 101b. As depicted in FIG. 5c, the sink 102 then switches the shared display screen with major share to the new active source 101b and PIP for the new passive source 101a.

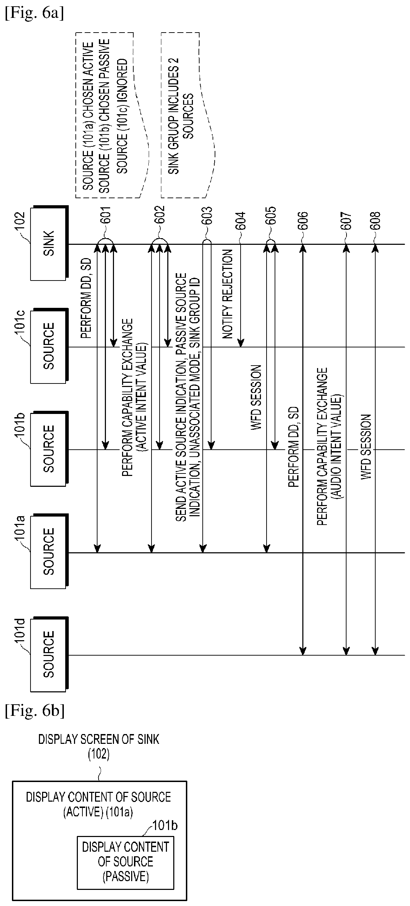

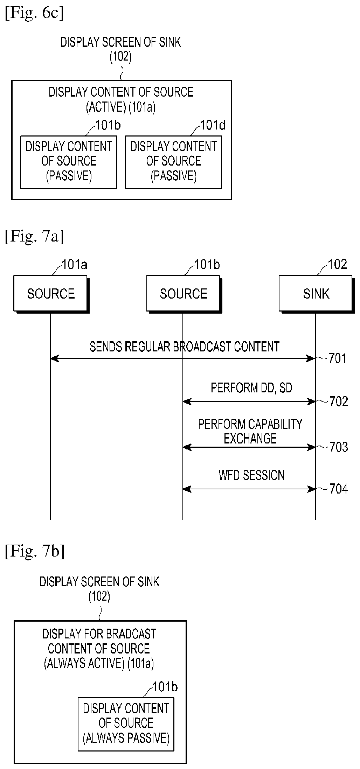

FIG. 6a illustrates a sequence diagram explaining establishment of one or more WFD sessions for a pre-grouping mode in the unassociated mode of operation and, FIG. 6b, FIG. 6c illustrate corresponding display screen of the sink, according to embodiments as disclosed herein. In the pre-grouping mode of operation the group is formed by the sink after DD, SD and capability exchange is performed with each source in Wi-Fi network 100 that is interested in joining the group but before WFD session is established between the sink and any of these sources. The method defines some rules for the pre-grouping mode of operation such as: The DD, SD and capability exchange of each source happens independently with the sink. The active and passive sources are chosen by the sink and are informed about the status by the sink. The WFD session starts between the sink and each of the sources in the group. If the sink can support more number of sources, new sources can join the group by performing DD, SD and capability exchange but these sources are assigned passive status at the time of joining the group of the pre-grouping mode of operation.

As depicted in the FIG. 6a, the source 101a, 101b and 101c respectively perform (601) DD, SD with the same sink 102 independently.

The source 101a, 101b and 101c respectively perform (602) capability exchange providing audio intent value to the sink 102 embedding their intent to become active source. The sink responding to request by sources 101a, 101b and 101c respectively for joining formed group by accepting or rejecting the request during the capability exchange. The sink 102 can accept or reject the sources to form a group based the Max_Source_Supported or the like parameters.

Based on the audio intent values, the sink 102 chooses source 101a as active source and source 101b as passive source. The source 101c is ignored by the sink for inclusion in group formation for the pre-grouping mode. The sink group formed for pre-group mode includes the sink 102, the source 101a and source 101b. Further the sink 102 sends (603) information to the source 101a and 101b respectively providing the active source indication (source 101a active status), the passive source indication (source 101b passive status), unassociated mode(current selected mode of operation) and the sink group ID assigned as unique identifier to the formed group. Further, the sink 102 notifies (604) the source 101c about its rejection by the sink 102 for inclusion in the sink group. Thereafter, the sink 102 allows establishment (605) of audio and video WFD session for source 101a and video WFD session for source 101b.

The FIG. 6b depicts the display screen of the sink 102 with major portion of the screen display to the active source 101a and PIP for source 101b.

Further, another source 101d performs (606) DD, SD and performs (607) capability exchange with the sink 102 providing the audio intent value. By default the sink 102 chooses source 101d as passive source. The sink 102 can accept or reject the request from the source 101d based on one or more parameters such as No_Of_PIP_Supported by the sink 102 and similar parameters. If the sink 102 accepts the request, the source 101d is assigned passive status by the sink 102. Thereafter, the source 101d establishes (608) only video WFD session with the sink 102.

FIG. 7a illustrates a sequence diagram explaining establishment of one or more WFD sessions for the part display mode of operation and FIG. 7b illustrates corresponding display screen of the sink, according to embodiments as disclosed herein.

In the part display mode the sink can use mirroring using the WFD session only on a part of the display screen of the sink. The part display mode is a sub case or special case of the picture in picture scenario described in FIG. 5a and FIG. 6a, except that the sink does not have any control on the source with active status. The method defines rules that apply for the part display mode such as: The sink can select to use only part of its display screen for WFD purposes. The sink indicates this to the WFD source interested in establishing the WFD session during capability exchange between the source and sink. The source assigned the active status is the default behavior of sink. Usually any broadcast or local content are assigned active source status.

As depicted in the FIG. 7a the active source 101a is already is utilizing the sink 102 and sends (701) regular broadcast content to the sink 102. For example, the regular broadcast content can be the television channel content from the cable operator. The sink 102 has no control over the active (main) source 101a. The source 101b, which is interested in utilizing the sink 102a for the WFD session in part display mode performs (702) the DD, SD and performs (703) capability exchange with the sink 102.

The method enables the sink to indicate the source 101b for its support for the part display mode using a new Part_Display_Support parameter during the capability exchange. The value of Part_Display_Support parameter is set to 1 (true) if the sink 102 supports the part display mode. The value of the Part_Display_Support parameter is set to 0 (false) if the sink fails to support part display mode.

Upon performing capability exchange, the WFD session for the part display is established (704) as sink 102 supports the part display mode. The status assigned to the source 101b is always passive and hence always is the video session with the PIP screen space. The WFD session established is usually non HD.

FIG. 7b depicts the display screen of sink 102 with broadcast content from active (main source) being displayed on major part of the display screen of sink 102 and the content from passive source 101b with PIP mode.

The above embodiments can be also applied to a security service. For example, assuming a security network environment that a security officer monitors the videos from multiple security cameras in a corporate office on the big screen in security room, all the security cameras and the big screen can be implemented by using Wi-Fi Display devices where the security cameras act as the Source and big screen like TV acting as the Sink. The security cameras and the TV are connected over Wi-Fi Infrastructure or Wi-Fi Direct or TDLS. Wi-Fi Display sessions run between the security cameras and the big screen TV. Given this situation there are multiple possible operation modes (that is, Scenarios 1, 2) described below.
Scenario 1: Number of security cameras is less and all videos can be displayed on TV
   1) Security Cameras discover the TV and start Wi-Fi Display session
   2) TV can divide its screen and provide resources to each security camera to display its video content. But the audio from only one source can be heard on the TV
   3) So each source device would have an audio intent value which is shared with the sink device i.e. TV
   4) The audio from source with highest intent is selected for audio rendering on the TV
   5) The audio intent value is dynamic and depends on the state of the source device. For example when a source device notices a certain emergency event it will increase its audio intent value to highest level and immediately sends the value to the sink device.
   6) The sink device understands this intent value and accepts the audio from this source device.
Scenario 2: Number of security cameras is large and all videos cannot be displayed on TV
   1) TV cannot provide resources to all security cameras in large corporate office and hence will provide resources to only some cameras located in important parts of the office like entrance, exits etc.
   2) These important Security Cameras discover the TV and start Wi-Fi Display session
   3) As usual the audio from only one source is played on the TV whose audio intent value is highest
   4) The other Video cameras (passive) though are monitoring the area and recording the happenings they will not be streaming the content (both video and audio) to the TV. The video display on TV is also defined based on the video intent value which is minimal for these passive video cameras
   5) The video intent value is dynamic and depends on the state of the source device. For example when a source device notices a certain emergency event it will increase its video intent to highest value. This will automatically increase the audio intent also to highest value too. These intent values are immediately sent to the sink device
   6) The sink device understands the invent value changes and displays video of the source device and also plays audio to get attention of the security personal
   7) Alternatively, instead of the intent values an emergency event notification is sent from source to the sink device which the sink device will interpret and provides resources to both video and audio from that particular source.

In both the scenarios above, the intent value in source device changes because of occurrence of some emergency events. The events could be any one of the 1) to 4) events described below:
1) Audio recorded above certain decibels on the source device
2) Motion detection on source device using motion sensor
3) Quick Video Frame Changes in recorded video at the source
4) Operator manually selecting a camera etc.

The embodiments disclosed herein can be implemented through at least one software program running on at least one hardware device and performing network management functions to control the elements. The elements shown in Figs. 1, 2, 3, 4, 5, 6 and 7 include blocks which can be at least one of a hardware device, or a combination of hardware device and software module.

## Claims

1. A method for streaming multimedia content in a Wi-Fi network (100), the method comprising:
discovering, by a sink (102), source association information comprising a source intent value during capability exchange between the sink (102) and at least one of a first source (101a) and a second source (101b; 101c; 101d) after performing device discovery and service discovery with the first source and the second source, wherein active status is assigned to one of the first source and the second source based on the source intent value;
establishing, by the sink (102), Wi-Fi Display, WFD, sessions with the first source (101a) and the second source (101b; 101c; 101d) for streaming the multimedia content from the first source and the second source;
displaying, by the sink (102), videos in the multimedia contents from the first source (101a) and the second source (101b; 101c; 101d), wherein a screen of the sink (102) is shared with the first source (101a) and the second source (101b; 101c; 101d);
selecting, by the sink (102), one of audios in the multimedia contents based on the source intent value; and
rendering, by the sink (102), the selected audio from one of the first source (101a) and the second source (101b; 101c; 101d) which has the highest source intent value.

2. The method of claim 1, wherein the discovered source association information further comprises a mode of operation of the first source (101a) and the second source (101b; 101c; 101d).

3. The method of claim 2, wherein the mode of operation for the WFD session comprises one of an associated mode, where the first source (101a) and the second source (101b; 101c) form a group among themselves prior to establishing a WFD session, an unassociated mode, where the first source (101a) and the second source (101b; 101d) do not form a group among themselves prior to establishing a WFD session, and a part display mode of the sink (102) and the first source (101a) and the second source (101b; 101c; 101d),
wherein the unassociated mode comprises one of a post grouping mode, where the sink (102) forms a group after a WFD session starts with one of the first source (101a) and the second source (101b; 101c; 101d), and a pre-grouping mode of operation, where the sink (102) forms a group before start of a WFD session with one of the first source (101a) and the second source (101b; 101c; 101d).

4. The method of claim 3, further comprising receiving, by the sink (102), the mode of operation in the discovered source association information from the first source (101a) and the second source (101b; 101c; 101d) using one of a frame for mode selection and a real time streaming protocol, RTSP, command.

5. The method of claim 3, further comprising selecting and informing, by the sink (102), the mode of operation to the first source (101a) and the second source (101b; 101c; 101d) during the capability exchange by sending an operation mode parameter indicating the selected mode of operation.

6. The method of claim 3, further comprising receiving an initiation request for the WFD session from a member of a pre-associated group in the associated mode,
wherein the member is one of the first source (101a) and the second source (101b; 101c; 101d).

7. The method of claim 6, wherein creating the pre-associated group further comprising:
performing the device discovery, the service discovery and the capability exchange between the first source (101a) and the second source (101b; 101c; 101d) to determine if the first source (101a) and second source (101b; 101c; 101d) support the associated mode, wherein the support is indicated by the first source (101a) and the second source (101b; 101c; 101d) using a parameter supporting source association during the capability exchange;
starting a source association procedure between the first source (101a) and the second source (101b; 101c; 101d) by one of: the first source (101a) and the second source (101b; 101c; 101d), if the parameter supporting the source association is true, to form the pre-associated group using RTSP commands, wherein the RTSP commands comprises an associate frame request and an associate frame response; and
expanding the pre-associated group based on parameters configured in the first source (101a) and the second source (101b; 101c; 101d),
wherein the parameters comprise at least one of: a number of associated sources in the pre-associated group, a maximum number of allowed source associations, and a capability for forming multiple source groups.

8. The method of claim 6, further comprising responding to the initiation request by:
determining, by the member, if the sink (102) supports a number of members in the pre-associated group, wherein the determining comprises comparing a number of the pre-associated group with a maximum number of members supported by the sink (102);
informing the members of the pre-associated group to initiate the WFD session in an associated mode using a RTSP session initiate frame command, if the sink (102) supports the number of the pre-associated group; and
sharing the screen of the sink (102) to the members of the pre-associated group by the sink (102) based on configuration settings of the sink (102) for the pre-associated group to mirror the multimedia content streamed by the members.

9. The method of claim 3, wherein in case of the post grouping mode, the method further comprising:
establishing, by the sink (102), the WFD session with the first source (101a) after the first source (101a) initiates the WFD session, wherein the first source (101a) is assigned an active source status by the sink (102);
establishing, by the sink (102), the WFD session with the second source (101d) after the second source (101d) initiates the WFD session based on a number of picture in picture, PIP, screens supported by the sink (102);
assigning, by the sink (102), passive source status to the second source (101d); and
mirroring, by the sink (102), the video, the audio of the first source (101a) and video of the second source (101d) to the sink (102).

10. The method of claim 9, further comprising the second source (101d) requesting the sink (102) with intent to acquire the active source status, further the sink (102) is configured to perform one of accept and reject the received request from the second source (101d).

11. The method of claim 3, wherein in case of the pre-grouping mode, the method further comprising:
forming a group after performing capability exchange between the first source (101a), the second source (101b; 101c; 101d) with the sink (102);
assigning the active source status to a member in the formed group and the passive source status to remaining members in the formed group;
mirroring to the sink (102), the video and the audio of the member assigned with the active source status and video of the remaining members assigned with the passive source status; and
responding to a request by the second source (101b; 101c; 101d) for joining the formed group by one of accepting and rejecting the request during the capability exchange.

12. The method of claim 3, wherein in case of the part display mode, the method further comprising:
displaying the video and rendering the audio of the first source (101a) assigned with the active source status by the sink (102), wherein the first source (101a) is a main source of the sink (102);
providing part display support indication to the second source (101b; 101c; 101d) during the capability exchange using a parameter supporting part display by the sink (102), wherein a value of the parameter is one of true and false;
indicating to the sink (102) an intent to use the part display mode by a source among the second sources (101b; 101c; 101d) if the value of the parameter supporting the part display is set to true;
assigning the passive status to the source by the sink (102); and
sharing the screen to display the video of the source assigned with the passive status on part of the screen by the sink (102).

13. A sink (102) for streaming multimedia content in a Wi-Fi network (100), the sink configured to:
discover source association information comprising a source intent during capability exchange between the sink (102) and at least one of a first source (101a) and second source (101b; 101c; 101d) after performing device discovery and service discovery with the first source and the second source, wherein active status is assigned to one of the first source and the second source based on the source intent value;
establish Wi-Fi display, WFD, sessions with the first source (101a) and the second source (101b; 101c; 101d) for streaming the multimedia content from the first source and the second source;
display videos in the multimedia contents from the first source (101a) and the second source (101b; 101c; 101d), wherein a screen of the sink (102) is shared with the first source (101a) and the second source (101b; 101c; 101d);
select one of audios in the multimedia contents based on the source intent value; and
render the selected audio from one of the first audio source (101a) and the second source (101b; 101c; 101d) which has the highest source intent value.

14. The sink (102) of claim 13 adapted to operate according to one of claims 2 to 12.

## Patentansprüche

1. Verfahren zum Streaming von Multimedia-Inhalten in einem WI-FI-Netzwerk (100), wobei das Verfahren umfasst:
Entdecken, durch eine Sink (102), von Quellzuordnungsinformationen, umfassend einen Quellabsichtswert während eines Kapazitätenaustauschs zwischen der Sink (102) und mindestens einer einer ersten Quelle (101a) und einer zweiten Quelle (101b; 101c; 101d) nach dem Durchführen einer Geräteentdeckung und Dienstentdeckung mit der ersten Quelle und der zweiten Quelle, wobei ein aktiver Status einer der ersten Quelle und der zweiten Quelle basierend auf dem Quellabsichtswert zugeordnet wird;
Einrichten, durch die Sink (102) von WI-FI-Anzeige-(WFD)-Sitzungen mit der ersten Quelle (101a) und der zweiten Quelle (101b; 101c; 101d) zum Streaming des Multimedia-Inhalts von der ersten Quelle und der zweiten Quelle;
Anzeigen, durch die Sink (102), von Videos in den Multimedia-Inhalten von der ersten Quelle (101a) und der zweiten Quelle (101b; 101c; 101d), wobei ein Bildschirm der Sink (102) mit der ersten Quelle (101a) und der zweiten Quelle (101b; 101c; 101d) geteilt wird;
Auswählen, durch die Sink (102) eines der Audios in den Multimedia-Inhalten, basierend auf dem Quellabsichtswert; und
Rendern, durch die Sink (102), des ausgewählten Audios von einer der ersten Quelle (101a) und der zweiten Quelle (101b; 101c; 101d), die den höchsten Quellabsichtswert aufweist.

2. Verfahren nach Anspruch 1, wobei die entdeckten Quellzuordnungsinformationen ferner einen Betriebsmodus der ersten Quelle (101a) und der zweiten Quelle (101b; 101c; 101d) umfassen.

3. Verfahren nach Anspruch 2, wobei der Betriebsmodus für die WFD-Sitzung eines eines zugeordneten Modus, wobei die erste Quelle (101a) und die zweite Quelle (101b; 101c) vor dem Einrichten einer WFD-Sitzung untereinander eine Gruppe bilden, eines nicht zugeordneten Modus, wobei die erste Quelle (101a) und die zweite Quelle (101b; 101d) vor dem Einrichten einer WFD-Sitzung untereinander keine Gruppe bilden, und eines Teilanzeigemodus der Sink (102) und der ersten Quelle (101a) und der zweiten Quelle (101b; 101c; 101d) umfasst, wobei der nicht zugeordnete Modus eines eines Nachgruppierungsmodus, wobei die Sink (102) nach dem Beginn einer WFD-Sitzung mit einer der ersten Quelle (101a) und der zweiten Quelle (101b; 101c; 101d) eine Gruppe bildet, und eines Vorgruppierungsbetriebsmodus, wobei die Sink (102) vor dem Beginn einer WFD-Sitzung mit einer der ersten Quelle (101a) und der zweiten Quelle (101b; 101c; 101d) eine Gruppe bildet, umfasst.

4. Verfahren nach Anspruch 3, ferner umfassend Empfangen, durch die Sink (102) des Betriebsmodus in den entdeckten Quellzuordnungsinformationen von der ersten Quelle (101a) und der zweiten Quelle (101b; 101c; 101d) mithilfe eines eines Frames zur Modusauswahl und eines Echtzeit-Streamingprotokoll-(RTSP)-Befehls.

5. Verfahren nach Anspruch 3, ferner umfassend Auswählen und Informieren, durch die Sink (102) des Betriebsmodus an die erste Quelle (101a) und die zweite Quelle (101b; 101c; 101d) während des Kapazitätenaustauschs durch Senden eines Betriebsmodusparameters, der den ausgewählten Betriebsmodus anzeigt.

6. Verfahren nach Anspruch 3, ferner umfassend Empfangen einer Initiierungsanfrage für die WFD-Sitzung von einem Mitglied der vor-zugeordneten Gruppe im zugeordneten Modus, wobei das Mitglied eine der ersten Quelle (101a) und der zweiten Quelle (101b; 101c; 101d) ist.

7. Verfahren nach Anspruch 6, wobei das Erstellen der vor-zugeordneten Gruppe ferner umfasst: Durchführen der Geräteentdeckung, der Dienstentdeckung und des Kapazitätenaustauschs zwischen der ersten Quelle (101a) und der zweiten Quelle (101b; 101c; 101d), um zu bestimmen, ob die erste Quelle (101a) und die zweite Quelle (101b; 101c; 101d) den zugeordneten Modus unterstützt, wobei die Unterstützung dadurch angezeigt wird, dass die erste Quelle (101a) und die zweite Quelle (101b; 101c; 101d) einen Parameter verwenden, der Quellzuordnung während des Kapazitätenaustauschs unterstützt;
Beginnen eines Quellzuordnungsverfahrens zwischen der ersten Quelle (101a) und der zweiten Quelle (101b; 101c; 101d) durch eines der Folgenden: die erste Quelle (101a) und die zweite Quelle (101b; 101c,101d), bilden die vor-zugeordnete Gruppe mithilfe von RTSP-Befehlen, wenn der die Quellzuordnung unterstützende Parameter wahr ist, wobei die RTSP-Befehle eine Frame-Zuordnungsanfrage und eine Frame-Zuordnungsantwort umfassen; und
Erweitern der vor-zugeordneten Gruppe basierend auf Parametern, die in der ersten Quelle (101a) und der zweiten Quelle (101b; 101c; 101d) konfiguriert sind, wobei die Parameter mindestens eines der Folgenden umfassen: eine Anzahl zugeordneter Quellen in der vor-zugeordneten Gruppe, eine maximale Anzahl zulässiger Quellzuordnungen und eine Kapazität zum Bilden mehrerer Quellgruppen.

8. Verfahren nach Anspruch 6, ferner umfassend Antworten auf die Initiierungsanfrage durch:
Bestimmen, durch das Mitglied, ob die Sink (102) eine Anzahl von Mitgliedern in der vor-zugeordneten Gruppe unterstützt, wobei das Bestimmen umfasst das Vergleichen einer Anzahl der vor-zugeordneten Gruppe mit einer maximalen Anzahl von Mitgliedern, die von der Sink (102) unterstützt werden;
Informieren der Mitglieder der vor-zugeordneten Gruppe, um die WFD-Sitzung in einem zugeordneten Modus mithilfe eines RTSP-Sitzungsinitiierungs-Frame-Befehls zu initiieren, wenn die Sink (102) die Anzahl der vor-zugeordneten Gruppen unterstützt; und
Teilen des Bildschirms der Sink (102) mit den Mitgliedern der vor-zugeordneten Gruppe durch die Sink (102), basierend auf Konfigurationseinstellungen der Sink (102) für die vor-zugeordnete Gruppe, um den von den Mitgliedern gestreamten Multimedia-Inhalt zu spiegeln.

9. Verfahren nach Anspruch 3, wobei das Verfahren im Fall des Nachgruppierungsmodus ferner umfasst:
Einrichten, durch die Sink (102) der WFD-Sitzung mit der ersten Quelle (101a), nachdem die erste Quelle (101a) die WFD-Sitzung initiiert, wobei die erste Quelle (101a) von der Sink (102) einem aktiven Quellstatus zugeordnet wird;
Einrichten, durch die Sink (102) der WFD-Sitzung mit der zweiten Quelle (101d), nachdem die zweite Quelle (101d) die WFD-Sitzung basierend auf einer Anzahl von Bild-in-Bild-(PIP)-Bildschirmen, die von der Sink (102) unterstützt werden, initiiert;
Zuordnen, durch die Sink (102) eines passiven Quellstatus zur zweiten Quelle (101d); und
Spiegeln, durch die Sink (102), des Videos, des Audios der ersten Quelle (101a) und des Videos der zweiten Quelle (101d) zur Sink (102).

10. Verfahren nach Anspruch 9, ferner umfassend das Anfragen durch die zweite Quelle (101d) der Sink (102) mit der Absicht, den aktiven Quellstatus zu erwerben, wobei die Sink (102) ferner konfiguriert ist, um eines von Annehmen und Verwerfen der empfangenen Anfrage von der zweiten Quelle (101d) durchzuführen.

11. Verfahren nach Anspruch 3, wobei im Fall des Vorgruppierungsmodus das Verfahren ferner umfasst:
Bilden einer Gruppe nach dem Durchführen von Kapazitätenaustausch zwischen der ersten Quelle (101a), der zweiten Quelle (101b; 101c; 101d) mit der Sink (102);
Zuordnen des aktiven Quellstatus zu einem Mitglied in der gebildeten Gruppe und des passiven Quellstatus zu den verbleibenden Mitgliedern der gebildeten Gruppe;
Spiegeln des Videos und des Audios des Mitglieds, dem der aktive Quellstatus zugeordnet wurde, und des Videos der verbleibenden Mitglieder, denen der passive Quellstatus zugeordnet wurde, an die Sink (102); und
Antworten auf eine Anfrage der zweiten Quelle (101b; 101c; 101d) zum Teilnehmen an der gebildeten Gruppe durch eines von Annehmen und Verwerfen der Anfrage während des Kapazitätenaustauschs.

12. Verfahren nach Anspruch 3, wobei das Verfahren im Fall des Teilanzeigemodus ferner umfasst:
Anzeigen des Videos und Rendern des Audios der ersten Quelle (101a), der der aktive Quellstatus durch die Sink (102) zugeordnet wurde, wobei die erste Quelle (101a) eine Hauptquelle der Sink (102) ist;
Bereitstellen einer Teilanzeigeunterstützungsanzeige zur zweiten Quelle (101b; 101c; 101d) während des Kapazitätenaustauschs mithilfe eines Parameters, der die Teilanzeige durch die Sink (102) unterstützt, wobei ein Wert des Parameters eines von wahr und falsch ist;
Anzeigen an die Sink (102) einer Absicht, den Teilanzeigemodus von einer Quelle unter den zweiten Quellen (101b; 101c; 101d) zu verwenden, wenn der Wert des die Teilanzeige unterstützenden Parameters auf wahr eingestellt ist;
Zuordnen des passiven Status zur Quelle durch die Sink (102); und
Teilen des Bildschirms zum Anzeigen des Videos der Quelle, der von der Sink (102) auf einem Teil des Bildschirms der passive Status zugeordnet wurde.

13. Sink (102) zum Streaming von Multimedia-Inhalten in einem WI-FI-Netzwerk (100), wobei die Sink konfiguriert ist, um:
Quellzuordnungsinformationen, umfassend einen Quellabsichtswert während eines Kapazitätenaustauschs zwischen der Sink (102) und mindestens einer einer ersten Quelle (101a) und einer zweiten Quelle (101b; 101c; 101d) nach dem Durchführen einer Geräteentdeckung und Dienstentdeckung mit der ersten Quelle und der zweiten Quelle zu entdecken, wobei ein aktiver Status einer der ersten Quelle und der zweiten Quelle basierend auf dem Quellabsichtswert zugeordnet wird;
WI-FI-Anzeige-(WFD)-Sitzungen mit der ersten Quelle (101a) und der zweiten Quelle (101b; 101c; 101d) zum Streaming des Multimedia-Inhalts von der ersten Quelle und der zweiten Quelle einzurichten;
Videos in den Multimedia-Inhalten von der ersten Quelle (101a) und der zweiten Quelle (101b; 101c; 101d) anzuzeigen, wobei ein Bildschirm der Sink (102) mit der ersten Quelle (101a) und der zweiten Quelle (101b; 101c; 101d) geteilt wird;
eines der Audios in den Multimedia-Inhalten, basierend auf dem Quellabsichtswert auszuwählen; und
das ausgewählte Audio von einer der ersten Quelle (101a) und der zweiten Quelle (101b; 101c; 101d), die den höchsten Quellabsichtswert aufweist, zu rendern.

14. Sink (102) nach Anspruch 13, die angepasst ist, um gemäß einem der Ansprüche 2 bis 12 betrieben zu werden.

## Revendications

1. Procédé de diffusion en continu de contenu multimédia sur un réseau Wi-Fi (100), le procédé comprenant :
la découverte, par un receveur (102), d'informations d'association de source comprenant une valeur d'intention de source pendant un échange de capacité entre le receveur (102) et au moins l'une d'une première source (101a) et d'une deuxième source (101b ; 101c; 101d) après la réalisation d'une découverte de dispositif et d'une découverte de service avec la première source et la deuxième source, dans lequel un statut actif est affecté à l'une de la première source et la deuxième source sur la base de la valeur d'intention de source ;
l'établissement, par le receveur (102), de sessions d'affichage Wi-Fi, WFD, avec la première source (101a) et la deuxième source (101b ; 101c; 101d) pour diffuser en continu le contenu multimédia depuis la première source et la deuxième source ;
l'affichage, par le receveur (102), de vidéos dans les contenus multimédias depuis la première source (101a) et la deuxième source (101b; 101c; 101d), dans lequel un écran du receveur (102) est partagé avec la première source (101a) et la deuxième source (101b ; 101c; 101d);
la sélection, par le receveur (102), de l'un de contenus audio dans les contenus multimédias sur la base de la valeur d'intention de source ; et
la restitution, par le receveur (102), du contenu audio sélectionné depuis l'une de la première source (101a) et la deuxième source (101b ; 101c; 101d) qui a la valeur d'intention de source la plus élevée.

2. Procédé selon la revendication 1, dans lequel les informations d'association de source découvertes comprennent en outre un mode de fonctionnement de la première source (101a) et la deuxième source (101b ; 101c; 101d).

3. Procédé selon la revendication 2, dans lequel le mode de fonctionnement pour la session WFD comprend l'un d'un mode associé, dans lequel la première source (101a) et la deuxième source (101b ; 101c) forment un groupe entre elles avant l'établissement d'une session WFD, un mode non-associé, dans lequel la première source (101a) et la deuxième source (101b ; 101d) ne forment pas de groupe entre elles avant l'établissement d'une session WFD, et un mode d'affichage partiel du receveur (102) et de la première source (101a) et la deuxième source (101b; 101c; 101d), dans lequel le mode non-associé comprend l'un d'un mode de post-groupement, dans lequel le receveur (102) forme un groupe après qu'une session WFD débute avec l'une de la première source (101a) et la deuxième source (101b; 101c; 101d), et un mode de fonctionnent de pré-groupement, dans lequel le receveur (102) forme un groupe avant le début d'une session WFD avec l'une de la première source (101a) et la deuxième source (101b ; 101c; 101d).

4. Procédé selon la revendication 3, comprenant en outre la réception, par le receveur (102), du mode de fonctionnement dans les informations d'association de source découvertes depuis la première source (101a) et la deuxième source (101b ; 101c; 101d) en utilisant l'une parmi une trame de sélection de mode et d'une commande de protocole de diffusion en continu en temps réel, RTSP.

5. Procédé selon la revendication 3, comprenant en outre la sélection et l'information, par le receveur (102), du mode de fonctionnement à la première source (101a) et la deuxième source (101b ; 101c; 101d) pendant l'échange de capacité en envoyant un paramètre de mode de fonctionnement indiquant le mode de fonctionnement sélectionné.

6. Procédé selon la revendication 3, comprenant en outre la réception d'une requête d'initiation pour la session WFD depuis un membre d'un groupe pré-associé dans le mode associé, dans lequel le membre est l'un de la première source (101a) et la deuxième source (101b ; 101c; 101d).

7. Procédé selon la revendication 6, dans lequel la création du groupe pré-associé comprenant en outre : l'exécution de la découverte de dispositif, la découverte de service et l'échange de capacité entre la première source (101a) et la deuxième source (101b ; 101c; 101d) pour déterminer si la première source (101a) et une deuxième source (101b ; 101c; 101d) prennent en charge le mode associé, dans lequel la prise en charge est indiquée par la première source (101a) et la deuxième source (101b ; 101c; 101d) en utilisant un paramètre prenant en charge l'association de source pendant l'échange de capacité ;
le début d'une procédure d'association de source entre la première source (101a) et la deuxième source (101b ; 101c ; 101d) par l'une de : la première source (101a) et la deuxième source (101b ; 101c ; 101d), si le paramètre prenant en charge l'association de source est vrai, pour former le groupe pré-associé en utilisant des commandes RTSP, dans lequel les commandes RTSP comprennent une requête de trame associée et une réponse de trame associée ; et
l'expansion du groupe pré-associé sur la base de paramètres configurés dans la première source (101a) et la deuxième source (101b ; 101c; 101d), dans lequel les paramètres comprennent au moins l'un de : un nombre de sources associées dans le groupe pré-associé, un nombre maximum d'associations de source autorisées, et une capacité de formation de groupes de sources multiples.

8. Procédé selon la revendication 6, comprenant en outre la réponse à la requête d'initiation en :
déterminant, par le membre, si le receveur (102) prend en charge un nombre de membres dans le groupe pré-associé, dans lequel la détermination comprend la comparaison d'un nombre du groupe pré-associé à un nombre maximum de membres pris en charge par le receveur (102) ;
l'information aux membres du groupe pré-associé pour initier la session WFD dans un mode associé en utilisant une commande de trame d'initiation de session RTSP, si le receveur (102) prend en charge le nombre du groupe pré-associé ; et
le partage de l'écran du receveur (102) aux membres du groupe pré-associé par le receveur (102) sur la base de paramètres de configuration du receveur (102) pour le groupe pré-associé pour dupliquer en miroir le contenu multimédia diffusé par les membres.

9. Procédé selon la revendication 3, dans lequel en cas du mode de post-groupement, le procédé comprenant en outre :
l'établissement, par le receveur (102), de la session WFD avec la première source (101a) après que la première source (101a) initie la session WFD, dans lequel la première source (101a) est affectée d'un statut de source active par le receveur (102) ;
l'établissement, par le receveur (102), de la session WFD avec la deuxième source (101d) après que la deuxième source (101d) initie la session WFD sur la base d'un nombre d'écrans image dans l'image, PIP, pris en charge par le receveur (102) ;
l'affectation, par le receveur (102), d'un statut de source passive à la deuxième source (101d) ; et
la duplication miroir, par le receveur (102), de la vidéo, de l'audio de la première source (101a) et la vidéo de la deuxième source (101d) au receveur (102).

10. Procédé selon la revendication 9, comprenant en outre la deuxième source (101d) demandant au receveur (102) avec intention d'acquérir le statut de source active, en outre le receveur (102) est configuré pour exécuter l'un de l'acception et du rejet de la requête reçue depuis la deuxième source (101d).

11. Procédé selon la revendication 3, dans lequel en cas du mode de pré-groupement, le procédé comprenant en outre :
la formation d'un groupe après l'exécution d'un échange de capacité entre la première source (101a), la deuxième source (101b ; 101c; 101d) avec le receveur (102) ;
l'affectation du statut de source active à un membre dans le groupe formé et du statut de source passive aux membres restant dans le groupe formé ;
la duplication miroir au receveur (102), de la vidéo et l'audio du membre affecté du statut de source active et la vidéo des membres restants affectés du statut de source passive ; et
la réponse à une requête par la deuxième source (101b ; 101c ; 101d) pour j oindre le groupe formé par l'un de l'acception et du rejet de la requête pendant l'échange de capacité.

12. Procédé selon la revendication 3, dans lequel en cas du mode d'affichage partiel, le procédé comprenant en outre :
l'affichage de la vidéo et la restitution de l'audio de la première source (101a) affectée du statut de source active par le receveur (102), dans lequel la première source (101a) est une source principale du receveur (102) ;
la fourniture d'une indication de prise en charge d'affichage partiel à la deuxième source (101b ; 101c; 101d) pendant l'échange de capacité en utilisant un paramètre prenant en charge l'affichage partiel par le receveur (102), dans lequel une valeur du paramètre est l'un de vrai et faux ;
l'indication au receveur (102) d'une intention d'utiliser le mode d'affichage partiel par une source parmi les deuxièmes sources (101b ; 101c; 101d) si la valeur du paramètre prenant en charge l'affichage partiel est défini sur vrai ;
l'affectation du statut passif à la source par le receveur (102) ; et
le partage de l'écran pour afficher la vidéo de la source affectée du statut passif sur une partie de l'écran par le receveur (102).

13. Receveur (102) de diffusion en continu de contenu multimédia sur un réseau Wi-Fi (100), le receveur configuré pour :
découvrir des informations d'association de source comprenant une intention de source pendant un échange de capacité entre le receveur (102) et au moins l'une d'une première source (101a) et d'une deuxième source (101b ; 101c ; 101d) après la réalisation d'une découverte de dispositif et d'une découverte de service avec la première source et la deuxième source, dans lequel un statut actif est affecté à l'une de la première source et la deuxième source sur la base de la valeur d'intention de source ;
établir des sessions d'affichage Wi-Fi, WFD, avec la première source (101a) et la deuxième source (101b ; 101c ; 101d) pour diffuser en continu le contenu multimédia depuis la première source et la deuxième source ;
afficher des vidéos dans les contenu multimédias depuis la première source (101a) et la deuxième source (101b ; 101c; 101d), dans lequel un écran du receveur (102) est partagé avec la première source (101a) et la deuxième source (101b ; 101c; 101d) ;
sélectionner l'un de contenus audio dans les contenus multimédias sur la base de la valeur d'intention de source ; et
restituer le contenu audio sélectionné depuis l'une de la première source audio (101a) et la deuxième source (101b ; 101c; 101d) qui a la valeur d'intention de source la plus élevée.

14. Receveur (102) selon la revendication 13, adapté pour fonctionner selon l'une des revendications 2 à 12.
